# EUROPÄISCHE PATENTSCHRIFT

(11) **EP 2 190 556 B1**
(45) Veröffentlichungstag und Bekanntmachung des Hinweises auf die Patenterteilung: **13.04.2011**
(21) Anmeldenummer: 08803816.1
(22) Anmeldetag: 08.09.2008
(51) Int. Cl.: B01D 50/00, B01D 46/52, B01D 46/00

(54) **FILTEREINRICHTUNG**
FILTER APPLIANCE
DISPOSITIF DE FILTRAGE

(30) Priorität: 11.09.2007 DE 202007012690 U
(43) Veröffentlichungstag der Anmeldung: 02.06.2010
(73) Patentinhaber: Mann + Hummel GmbH, 71638 Ludwigsburg (DE)
(72) Erfinder: GROSCHE, Stefanie, 67373 Dudenhofen (DE); RANKER, Thomas, 66424 Homburg (DE)
(86) Internationale Anmeldenummer: PCT/EP2008/061847
(87) Internationale Veröffentlichungsnummer: WO 2009/034050

(56) Entgegenhaltungen:
- EP-A- 1 649 920
- DE-A1- 19 534 036
- DE-A1-102005 031 059
- US-A- 5 753 117

## Beschreibung

### Technisches Gebiet

Die Erfindung bezieht sich auf eine Filtereinrichtung mit einem Filterelement, das austauschbar in ein Filtergehäuse einsetzbar ist, nach dem Oberbegriff des Anspruches 1.

### Stand der Technik

Aus der EP 1 649 920 A1 ist eine Filtervorrichtung für Fluide bekannt, mit einem axial durchströmten Filterelement, welches wechselseitig verschlossene axial durchströmte Filterkanäle aufweist. Das Filterelement weist einen zentral angeordneten Stützkörper auf, welcher in Verbindung mit einem Gegenpart eine Handhabung des Filterelementes zu Wartungszwecken gewährleistet. Der Gegenpart ist dabei bevorzugt als Sicherungsgitter ausgeführt, wodurch eine Beschädigung der stirnseitigen Oberfläche des Filterelementes vermieden werden kann.

Aus der US 5 753 117 A ist eine Fluidfilteranordnung bekannt, die einen abtrennbaren Schnappdeckel umfasst, der Verriegelungsfinger aufweist, wobei der Schnappdeckel durch Biegen von einer austauschbaren Filterpatrone abtrennbar ist.

Aus der EP 1 364 695 A1 ist ein Luftfilter bekannt, der zur Reinigung von Verbrennungsluft im Ansaugtrakt einer Brennkraftmaschine eingesetzt wird. Der Luftfilter besteht aus einer Filterpatrone, die in ein Filtergehäuse eingesetzt und axial von der zu reinigenden Verbrennungsluft durchströmt wird. Das Filtergehäuse ist von einem Gehäusedeckel zu verschließen, der im montierten Zustand über Verschlusselemente am Filtergehäuse gehalten ist. Der Gehäusedeckel befindet sich an einer Umfangsseite des Filtergehäuses, so dass bei abgenommenem Gehäusedeckel die Filterpatrone radial in das Filtergehäuse einzusetzen bzw. aus diesem zu entnehmen ist. Um das Einsetzen bzw. Entnehmen der Filterpatrone zu erleichtern, ist das Filterelement in einem eigenen Trägergehäuse fest aufgenommen, an dem ein Bügel angeordnet ist, welcher die Handhabung der Filterpatrone erleichtern soll.

### Offenbarung der Erfindung

Der Erfindung liegt die Aufgabe zugrunde, mit einfachen konstruktiven Maßnahmen das Einsetzen bzw. Herausnehmen eines Filterelementes in ein bzw. aus einem Filtergehäuse zu erleichtern.

Diese Aufgabe wird erfindungsgemäß mit den Merkmalen des Anspruches 1 gelöst. Die Unteransprüche geben zweckmäßige Weiterbildungen an.

Bei der erfindungsgemäßen Filtereinrichtung sind sowohl am Filterelement als auch am Gehäusedeckel Rastmittel angeordnet, die in eine gemeinsame Rastposition zu verbringen sind, in der Filterelement und Gehäusedeckel fest miteinander verrastet sind. Die korrespondierenden Rastmittel können in eine Außerrastposition verstellt werden, in der das Filterelement vom Gehäusedeckel gelöst ist.

Diese Ausführung eröffnet die Möglichkeit, zur Montage bereits außerhalb des Aufnahmeraums im Filtergehäuse das Filterelement am Gehäusedeckel zu verrasten und im verrasteten Zustand in das Filtergehäuse einzusetzen. Während des regulären Betriebs der Filtereinrichtung bleibt die Verrastung zwischen dem Filterelement und dem Gehäusedeckel bestehen. Zur Entnahme des Filterelementes aus dem Filtergehäuse muss lediglich der Deckel mitsamt dem daran verrasteten Filterelement angehoben werden; das Abnehmen des Deckels und die Entnahme des Filterelementes fallen dadurch zu einem gemeinsamen Montageschritt zusammen. Sowohl die Montage als auch die Demontage können schneller und einfacher durchgeführt werden.

Die Rastmittel zwischen dem Filterelement und dem Gehäusedeckel sind grundsätzlich unabhängig von Verschlusselementen bzw. Rasteinrichtungen ausgebildet, mit denen der Gehäusedeckel im montierten Zustand am Filtergehäuse gesichert ist. Gleichwohl kann es zweckmäßig sein, die Rastmittel zwischen Filterelement und Gehäusedeckel auch zur Sicherung des Gehäusedeckels am Filtergehäuse einzusetzen.

Gemäß einer vorteilhaften Weiterbildung ist mindestens ein Rastmittel - entweder das Rastmittel am Filterelement oder das Rastmittel am Gehäusedeckel, ggf. auch beide Rastmittel - im montierten Zustand der Filtereinrichtung am Filtergehäuse abgestützt und wird durch das Filtergehäuse in der Rastposition gesichert. Dadurch ist sichergestellt, das im montierten Zustand sich das Filterelement nicht versehentlich vom Gehäusedeckel lösen kann, sondern über die gesamte Betriebsdauer am Deckel gehalten ist, so dass mit dem nächsten geplanten Entnehmen des Filterelementes aus dem Gehäuse lediglich der Deckel vom Gehäuse gelöst und abgenommen werden muss, wodurch gleichzeitig auch das Filterelement aus dem Aufnahmeraum im Filtergehäuse herausgenommen wird. Auch Vibrationen, Schläge oder dergleichen können nicht zu einem versehentlichen Lösen der Verbindung zwischen Gehäusedeckel und Filterelement führen.

Diese Sicherung erfolgt vorteilhafterweise dadurch, dass der stirnseitige Rand des Filtergehäuses in eine Einschuböffnung eingeführt wird, die von einem Rastmittel radial begrenzt wird. Beispielsweise kann eines der Rastmittel als Lasche ausgeführt sein, die in der Rastposition in eine zugeordnete Ausnehmung am anderen Bauteil einragt, wobei die Lasche die Einschuböffnung radial begrenzt. Ist die Lasche beispielsweise am Filterelement angeordnet, insbesondere an einem radial überstehenden Trägerring des Filterelements, und wird in der Rastposition in eine Ausnehmung eingedrückt, die sich an einem umlaufenden Rand des Gehäusedeckels befindet, so liegt die Einschuböffnung für das Filtergehäuse auf der radialen Innenseite der Lasche, wobei mit dem axialen Einschieben des stirnseitigen Gehäuserandes in die Einschuböffnung ein radiales Verstellen der Lasche verhindert wird und somit die Lasche auch nicht in die Außerrastposition überführt werden kann. Erst im geöffneten Zustand, also bei geöffnetem Deckel und zugleich entnommenem Filterelement, kann die Lasche in die Außerrastposition radial nach innen gedrückt werden, in der der Gehäusedeckel und das Filterelement axial auseinander geschoben werden können. Dies kann problemlos durchgeführt werden, da das Filtergehäuse nicht mehr in die Einschuböffnung einragt und somit auch kein Hindernis für die Überführung der Lasche von der Rast- in die Außerrastposition darstellt.

Grundsätzlich ist es aber auch möglich, dass die Lasche nicht am Filterelement bzw. dem Trägerring des Filterelementes angeordnet ist, sondern am Gehäusedeckel, und das Rastmittel am Filterelement dementsprechend als Ausnehmung gebildet ist, in die in der Rastposition die Lasche einragt.

Der Trägerring, welcher das Filterelement einfasst und fest mit diesem verbunden ist und in dem eines der Rastmittel angeordnet ist, besitzt zweckmäßigerweise einen kleineren Außendurchmesser als das Filtergehäuse, so dass der vorteilhaft im stirnseitigen Bereich angeordnete Trägerring im Filtergehäuse Platz findet. Die umlaufende Einschubnut befindet sich zwischen Trägerring und dem außen am Trägerring angeordneten Rastmittel.

Der Gehäusedeckel kann zusätzlich zu seiner Funktion, den Aufnahmeraum für das Filterelement zu begrenzen, eine weitere Aufgabe übernehmen. Infrage kommt beispielsweise die Integration eines Vorfilters in den Gehäusedeckel, so dass das zu reinigende Fluid zunächst über den Vorfilter geleitet und anschließend durch das Filterelement innerhalb des Filtergehäuses geführt wird, das die Aufgabe eines Hauptfilters übernimmt. Vorfilter und Hauptfilter liegen in dieser Ausführung axial hintereinander im Strömungsweg des zu reinigenden Fluids.

Die Filtereinrichtung kann sowohl zur Reinigung gasförmiger Fluide eingesetzt werden, insbesondere für die Filtration von Verbrennungsluft für Brennkraftmaschinen, als auch für Flüssigkeiten, beispielsweise Kraftstoff oder Öl.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 eine perspektivische Darstellung einer Filtereinrichtung, die axial von Fluid zu durchströmen ist, bestehend aus einem Filterelement mit ovalem Querschnitt und einem Gehäusedeckel, in den ein Vorabscheider integriert ist, wobei am Filterelement ein Trägerring angeordnet ist, an dem eine Lasche gehalten ist, welche ein Rastmittel bildet, das in eine zugeordnete Ausnehmung im Gehäusedeckel einzusetzen ist,

Fig. 2 einen Schnitt durch Gehäusedeckel und Filterelement im Bereich der in eine Rastposition zu verbringenden Rastmittel,

Fig. 3 Filterelement und Gehäusedeckel in verrasteter Position und in eingesetztem Zustand im Filtergehäuse, welches lediglich schematisch angedeutet ist,

Fig. 4 einen Schnitt aus dem Bereich der Rastmittel zwischen Gehäusedeckel und Filterelement, dargestellt in Rastposition,

Fig. 5 eine Filtereinrichtung mit einem Filterelement und einem Gehäusedeckel mit integriertem Vorfilter in einer weiteren Ausführung der Rastmittel, über die Gehäusedeckel und Filterelement miteinander zu verbinden sind,

Fig. 6 das Detail VI aus Fig. 5 in vergrößerter Darstellung,

Fig. 7 eine Seitenansicht auf Filterelement und Gehäusedeckel im verrasteten Zustand,

Fig. 8 einen Schnitt durch die Rastmittel, dargestellt in Außerrastposition,

Fig. 9 eine Fig. 8 entsprechende Darstellung, jedoch mit den Rastmitteln in Rastposition.

In den Figuren sind gleiche Bauteile mit gleichen Bezugszeichen versehen.

### Ausführungsformen der Erfindung

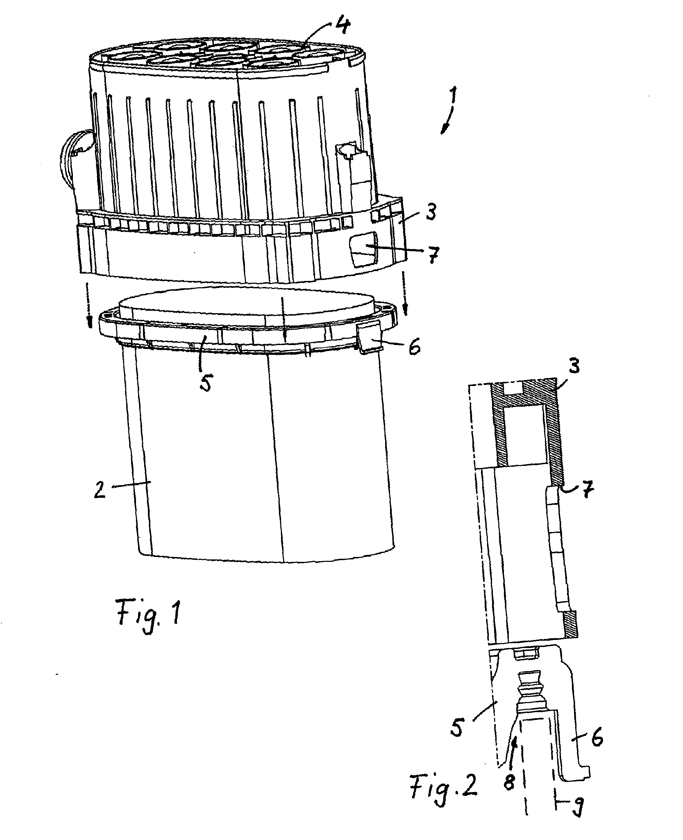

Bei der in Fig. 1 dargestellten Filtereinrichtung 1 handelt es sich insbesondere um einen Luftfilter, der im Ansaugtrakt einer Brennkraftmaschine zur Filtration der herangeführten Verbrennungsluft eingesetzt wird. Die Filtereinrichtung 1 umfasst ein Filterelement 2, das einen ovalen Querschnitt aufweist und axial von dem zu reinigenden Fluid durchströmt wird. Der Filtereinrichtung 1 ist des Weiteren ein Gehäusedeckel 3 zugeordnet, in den ein Vorfilter 4 integriert ist, welcher als Zyklonvorabscheider ausgeführt ist. Der Vorfilter 4 ist dem Filterelement 2 axial vorgelagert, so dass grobe Schmutzpartikel zunächst am Vorfilter 4 ausgeschieden werden, bevor das Fluid das Hauptfilterelement 2 durchströmt.

In Fig. 1 sind Filterelement 2 und Gehäusedeckel 3 im auseinander gebauten Zustand dargestellt. Für die Montage werden zunächst Filterelement 2 und Gehäusedeckel 3 miteinander verbunden, anschließend wird das vorgefertigte Modul, bestehend aus Gehäusedeckel und Filterelement, in das Filtergehäuse eingesetzt bzw. aufgesetzt.

Die Verbindung zwischen dem Filterelement 2 und dem Gehäusedeckel 3 erfolgt mithilfe von Rastmitteln, die im Ausführungsbeispiel als Lasche 6 an einem mit dem Filterelement 2 verbundenen Trägerring 5 und als Ausnehmung 7 im Gehäusedeckel 3 ausgeführt sind. Der Trägerring 5 umschließt das Filterelement 2 im Bereich von dessen dem Gehäusedeckel 3 benachbarter Stirnseite; der Außendurchmesser des Trägerringes 5 ist zweckmäßigerweise geringer als der Außendurchmesser des Filtergehäuses, in das das Filterelement 2 eingesetzt wird.

Wie Fig. 2 zu entnehmen, begrenzt die Lasche 6, die einteilig mit dem Trägerring 5 ausgebildet ist, eine Einschuböffnung 8, die zwischen dem Außenmantel des Trägerrings 5 und der Innenwand der Lasche 6 gebildet ist, wobei sich die Lasche 6 im Ruhezustand etwa in Achsrichtung und damit parallel zum Außenmantel des Filterelementes 2 erstreckt. Wie in Fig. 2 mit gestrichelter Linie angedeutet, dient die Einschuböffnung 8 zur Aufnahme der Stirnseite des Filtergehäuses 9.

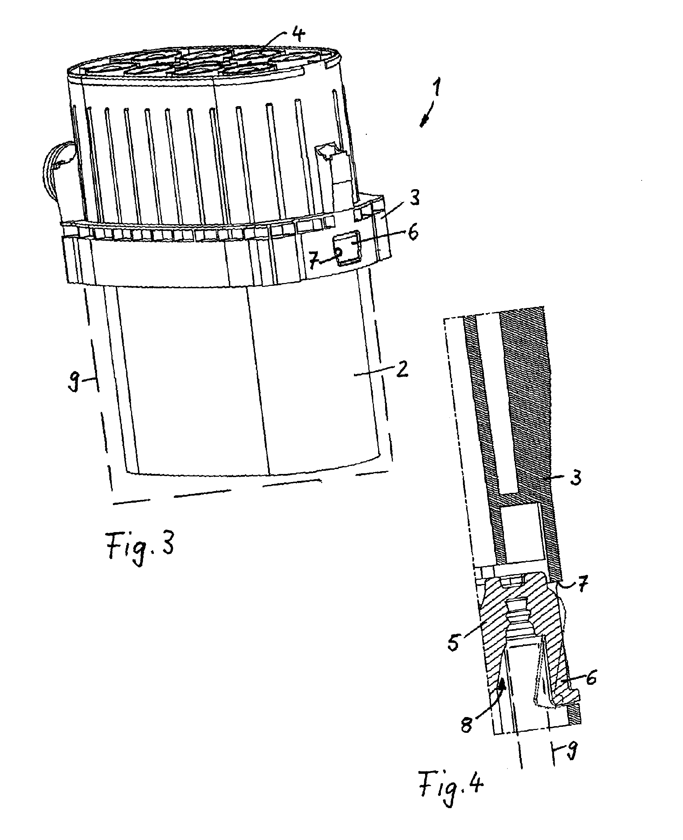

In den Figuren 3 und 4 ist die Filtereinrichtung 1 mit dem Filterelement 2 und dem Gehäusedeckel 3 im verriegelten bzw. verrasteten Zustand dargestellt. In der Rastposition ragt die Lasche 6 in die Ausnehmung 7 ein, die im Gehäusedeckel 3 gebildet ist. Zweckmäßigerweise sind im Bereich gegenüberliegender Seiten jeweils eine Lasche 6 und eine zugeordnete Ausnehmung 7 vorgesehen. Die Lasche 6 ist durch ihre Eigenspannung in die Rastposition kraftbeaufschlagt; die Rastposition der Lasche 6 ist gekennzeichnet durch die in Fig. 2 und in Fig. 4 mit durchgezogenem Strich dargestellte Position mit etwa achsparalleler Ausrichtung bzw. paralleler Lage zur Mantelfläche des Filterelementes 2. In Fig. 4 ist zusätzlich die Außerrastposition der Lasche 6 mit gestrichelter Linie dargestellt, in der die Lasche 6 radial nach innen in Richtung der Einschuböffnung 8 gebogen ist, und zwar so weit, dass die Ausnehmung 7 von der Lasche 6 frei gegeben ist und Filterelement 2 und Gehäusedeckel 3 axial voneinander weg geschoben werden können. Durch ihre Eigenspannung befindet sich aber die Lasche 6 in einer stabilen Rastposition, sobald die Lage in der Ausnehmung 7 erreicht wird.

Die Verstellung der Lasche 6 aus der Rastposition in die Außerrastposition ist jedoch nur möglich, wenn die Einschuböffnung 8 vom Filtergehäuse 9 frei gegeben ist. Wie in Fig. 4 dargestellt, kann die Außerrastposition der Lasche 6 nicht eingenommen werden, wenn die Stirnseite des Filtergehäuses 9 in die Einschuböffnung 8 eingeführt ist.

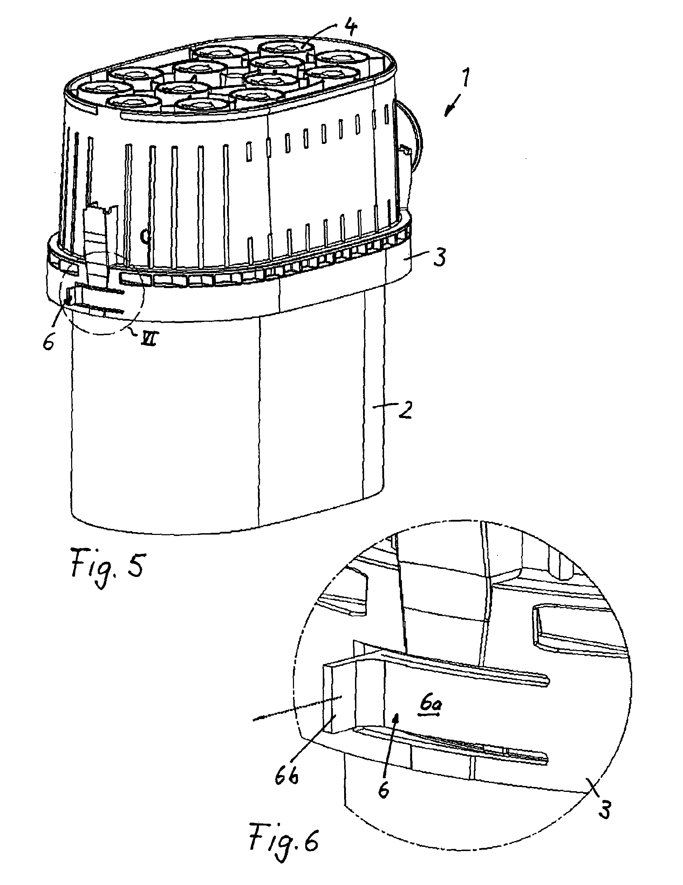

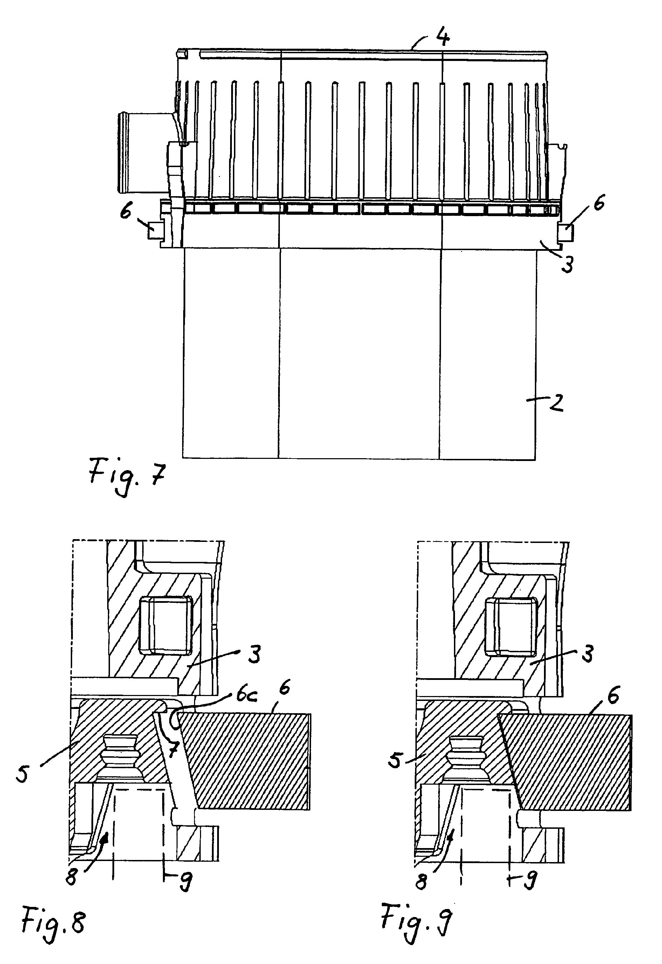

In den Figuren 5 bis 9 ist ein weiteres Ausführungsbeispiel für eine Filtereinrichtung 1 dargestellt. Die Filtereinrichtung ist im Wesentlichen gleich aufgebaut wie diejenige des ersten Ausführungsbeispiels, so dass insoweit auf die Beschreibung zum ersten Ausführungsbeispiel verwiesen wird. Unterschiede bestehen aber in der Ausführung der Rastmittel, über die das Filterelement 2 und der Gehäusedeckel 3 miteinander verrastet werden. Die Rastmittel bestehen zwar ebenfalls aus einer Lasche 6 und einer Ausnehmung 7, jedoch befindet sich die Lasche 6 am Außenumfang des Gehäusedeckels 3 benachbart zu der dem Filterelement 2 zugewandten Seite. Die Lasche 6 ist in die Wandung des Deckels integriert und besteht aus einem sich in Umfangsrichtung über ein Winkelsegment erstreckenden Rastabschnitt 6a, der einenends einteilig mit dem Gehäusedeckel 3 ausgebildet ist und anderenends keine Verbindung zum Gehäusedeckel aufweist. An dieser freien Stirnseite der Lasche 6 ist ein Griff 6b einteilig ausgebildet, der radial nach außen absteht. Auf der radialen Innenseite (Fig. 8, Fig. 9) ist an der Lasche 6 eine Rastkante 6c gebildet, die in der Rastposition in eine Rastausnehmung 7 einragt, die auf der radialen Außenseite des Trägerringes 5 gebildet ist, welcher fest mit dem Filterelement 2 verbunden ist. Die Rastausnehmung 7 ist als Rastabsatz ausgeführt, der in Achsrichtung einen Formschluss zwischen der Rastkante 6c und dem Trägerring 5 ermöglicht.

## Patentansprüche

1. Filtereinrichtung, mit einem Filterelement (2), das austauschbar in ein Filtergehäuse (9) einsetzbar ist, welches von einem Gehäusedeckel (3) zu verschließen ist, **dadurch gekennzeichnet, dass** am Filterelement (2) und am Gehäusedeckel (3) korrespondierende Rastmittel (6, 7) angeordnet sind, die zwischen einer Rastposition und einer Außerrastposition zu verstellen sind, wobei mindestens ein Rastmittel (6) im montierten Zustand der Filtereinrichtung (1) am Filtergehäuse (9) abgestützt und durch das Filtergehäuse (9) in der Rastposition gesichert ist.

2. Filtereinrichtung nach Anspruch 1, **dadurch gekennzeichnet, dass** das im montierten Zustand gesicherte Rastmittel (6) auf der Außenseite des Filtergehäuses (9) anliegt.

3. Filtereinrichtung nach einem der Ansprüche 1 bis 2, **dadurch gekennzeichnet, dass** die Rastmittel (6, 7) durch eine Relativbewegung in Radialrichtung zwischen Rast- und Außerrastposition zu verstellen sind.

4. Filtereinrichtung nach einem der Ansprüche 1 bis 3, **dadurch gekennzeichnet, dass** das Rastmittel (6) am Filterelement (2) an einem das Filterelement (2) einfassenden Trägerring (5) angeordnet ist.

5. Filtereinrichtung nach Anspruch 4, **dadurch gekennzeichnet, dass** der Trägerring (5) einen kleineren Außendurchmesser aufweist als das Filtergehäuse (9).

6. Filtereinrichtung nach einem der Ansprüche 1 bis 5, **dadurch gekennzeichnet, dass** ein Rastmittel als Ausnehmung (7) und das korrespondierende Rastmittel als in die Ausnehmung (7) eingreifende Lasche (6) ausgebildet ist.

7. Filtereinrichtung nach Anspruch 6, **dadurch gekennzeichnet, dass** die Lasche (6) durch ihre Eigenspannung in Richtung der Rastposition kraftbeaufschlagt ist.

8. Filtereinrichtung nach Anspruch 6 oder 7, **dadurch gekennzeichnet, dass** das Rastmittel am Gehäusedeckel (3) als Ausnehmung (7) und das Rastmittel am Filterelement (2) als Lasche (6) ausgeführt ist, die eine Einschuböffnung (8) für die Stirnseite des Filtergehäuses (9) begrenzt.

9. Filtereinrichtung nach Anspruch 4 und 6 oder 7, **dadurch gekennzeichnet, dass** das Rastmittel am Gehäusedeckel (3) als Lasche (6) und das Rastmittel am Filterelement (2) als Ausnehmung (7) im Trägerring (5) ausgeführt ist, wobei die Einschuböffnung (8) für die Stirnseite des Filtergehäuses (9) von dem Trägerring (5) begrenzt ist.

10. Filtereinrichtung nach einem der Ansprüche 1 bis 9, **dadurch gekennzeichnet, dass** in den Gehäusedeckel (3) ein Vorfilter (4) integriert ist.

## Claims

1. Filtering device, with a filter element (2) that is replaceably insertable into a filter housing (9) which is to be closed by a housing cover (3), **characterized in that** corresponding locking devices (6, 7), which can be displaced between a locking position and a non-locking position, are disposed at the filter element (2) and the housing cover (3), at least one locking device (6) being supported at the filter housing (9) when the filtering device (1) is mounted and secured in the engaged position by the filter housing (9).

2. Filtering device according to claim 1, **characterized in that** in mounted position the secured locking device (6) butts against the exterior side of the filter housing (9).

3. Filtering device according to one of the claims 1 to 2, **characterized in that** the locking devices (6, 7) are to be displaced by a relative movement in radial direction between a locking position and a non-locking position.

4. Filtering device according to one of the claims 1 to 3, **characterized in that** the locking device (6) of the filter element (2) is disposed at a carrier ring (5) surrounding the filter element (2).

5. Filtering device according to claim 4, **characterized in that** the carrier ring (5) features a smaller external diameter than the filter housing (9).

6. Filtering device according to one of the claims 1 to 5, **characterized in that** one locking device is designed as recess (7) and the corresponding locking device as flap (6) engaging into the recess (7).

7. Filtering device according to claim 6, **characterized in that** the flap (6), due to its internal stress, is subjected to strength into the direction of the locking position.

8. Filtering device according to claim 6 or 7, **characterized in that** the locking device of the housing cover (3) is designed as recess (7) and the locking device of the filter element (2) as flap (6) which defines an insertion opening (8) for the front side of the filter housing (9).

9. Filtering device according to claim 4 and 6 or 7, **characterized in that** the locking device of the housing cover (3) is designed as flap (6) and the locking device at the filter element (2) as recess (7) in the carrier ring (5), the insertion opening (8) for the front side of the filter housing (9) being defined by the carrier ring (5).

10. Filtering device according to one of the claims 1 to 9, **characterized in that** a pre-filter (4) is integrated into the housing cover (3).

## Revendications

1. Dispositif de filtration avec un élément filtrant (2) pouvant être inséré de manière échangeable dans un boîtier de filtre (9) lequel peut être fermé par un couvercle de boîtier (3), **caractérisé en ce que** des éléments d'encliquetage (6, 7) correspondants pouvant être déplacés entre une position d'encliquetage et une position de décliquetage sont disposés sur l'élément filtrant (2) et sur le couvercle de boîtier (3), au moins un élément d'encliquetage (6) s'appuyant, lorsque le dispositif de filtration (1) est monté, sur le boîtier de filtre (9) et étant sécurisé par le boîtier de filtre (9) en position d'encliquetage.

2. Dispositif de filtration selon la revendication 1, **caractérisé en ce que** l'élément d'encliquetage (6) sécurisé en position montée touche la face extérieure du boîtier de filtre (9).

3. Dispositif de filtration selon l'une des revendications 1 à 2, **caractérisé en ce que** les éléments d'encliquetage (6, 7) peuvent être déplacés par un mouvement relatif en sens radial entre une position d'encliquetage et une position de décliquetage.

4. Dispositif de filtration selon l'une des revendications 1 à 3, **caractérisé en ce que** l'élément d'encliquetage (6) de l'élément filtrant (2) est disposé sur une bague de support (5) encerclant l'élément filtrant (2).

5. Dispositif de filtration selon la revendication 4, **caractérisé en ce que** la bague de support (5) présente un diamètre extérieur plus petit que le boîtier de filtre (9).

6. Dispositif de filtration selon l'une des revendications 1 à 5, **caractérisé en ce qu'**un élément d'encliquetage est réalisé en tant que creux (7) et l'élément d'encliquetage correspondant est réalisé en tant que patte (6) en prise dans le creux (7).

7. Dispositif de filtration selon la revendication 6, **caractérisé en ce qu'**en raison de sa propre tension, la patte (6) est soumise à une force en direction de la position d'encliquetage.

8. Dispositif de filtration selon la revendication 6 ou 7, **caractérisé en ce que** l'élément d'encliquetage du couvercle du boîtier (3) est réalisé en tant que creux (7) et que l'élément d'encliquetage de l'élément filtrant (2) est réalisé en tant que patte (6) qui limite un orifice d'insertion (8) pour la face frontale du boîtier de filtre (9).

9. Dispositif de filtration selon la revendication 4 et 6 ou 7, **caractérisé en ce que** l'élément d'encliquetage du couvercle du boîtier (3) est réalisé en tant que patte (6) et que l'élément d'encliquetage de l'élément filtrant (2) est réalisé en tant que creux (7) dans la bague de support (5), l'orifice d'insertion (8) pour la face frontale du boîtier de filtre (9) étant limité par la bague de support (5).

10. Dispositif de filtration selon l'une des revendications 1 à 9, **caractérisé en ce qu'**un pré-filtre (4) est intégré au couvercle du boîtier (3).
